# EUROPEAN PATENT APPLICATION

(11) **EP 1 628 238 A1**
(43) Date of publication of application: **22.02.2006**
(21) Application number: 05253328.8
(22) Date of filing: 31.05.2005
(51) Int. Cl.: G06K 7/00

(54) **RFID reader/writer and a system having multiple reader/writers**

(30) Priority: 17.08.2004 JP 2004237437
(71) Applicant: FUJITSU LIMITED, Kawasaki-shi, Kanagawa 211-8588 (JP)
(72) Inventor: Takano, Takeshi, Fujitsu Limited, Kawasaki-shi Kanagawa 211-8588 (JP); Taniguchi, Tomohiko, Fujitsu Limited, Kawasaki-shi Kanagawa 211-8588 (JP); Oishi, Yasuyuki, Fujitsu Limited, Kawasaki-shi Kanagawa 211-8588 (JP); Tanaka, Yoshinori, Fujitsu Limited, Kawasaki-shi Kanagawa 211-8588 (JP); Ninomiya, Teruhisa, Fujitsu Limited, Kawasaki-shi Kanagawa 211-8588 (JP); Aoki, Nobuhisa, Fujitsu Limited, Kawasaki-shi Kanagawa 211-8588 (JP); Nakanishi, Yuichi, Fujitsu Limited, Kawasaki-shi Kanagawa 211-8588 (JP)
(74) Representative: Hitching, Peter Matthew

(57) **Abstract**

A system establishes synchronicity of transmission and receiving for each reader/writer of an RF tag independently without obtaining synchronization of the reader/writers by means of an unspecified number of control terminals is desired as a reader/writer system. A reader/writer comprises a transmitter operable to transmit an interrogation signal to an RF tag, and a receiver operable to receive a response signal from an RF tag, wherein the transmitter is operable to transmit an interrogation signal based on a synchronization signal received from another reader/writer.

## Description

The present invention relates to a reader/writer which prevents interference among multiple reader/writers (R/W) which perform wireless communication with individual RF tags. The present invention particularly relates to a reader/writer and RFID system in which interrogation signals transmitted from a reader/writer to an RF tag by wireless communication are prevented from interfering with the wireless communication of other reader/writers.

Heretofore, it has been known that mutual interference between reader/writer can be prevented by synchronizing the timing of the transmission and receiving processes among reader/writers.

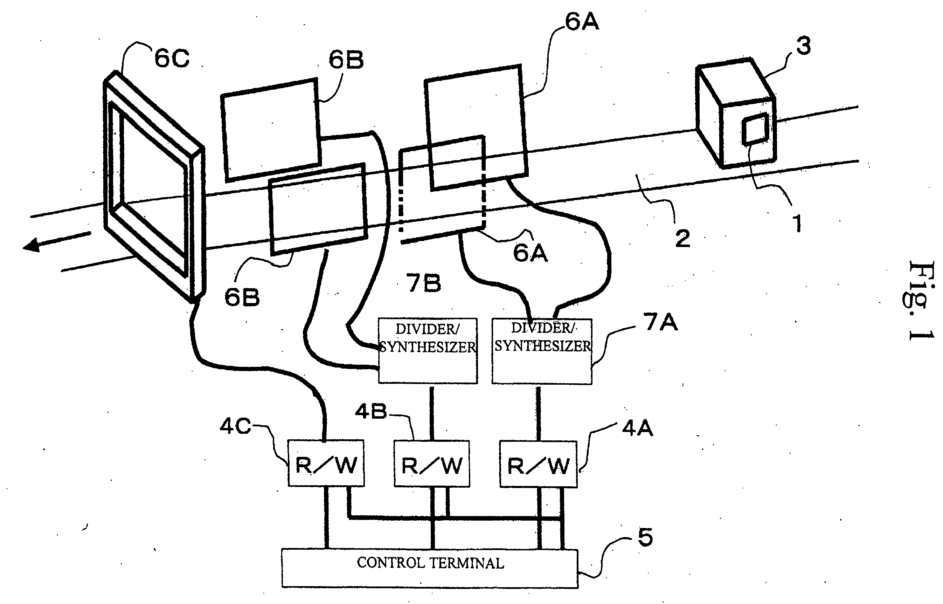

Figure 1 shows the configuration of a conventional reader/writer system.

This conventional example shows an application to a reading distribution system wherein an IC card (transponder) 1 is attached to the product 3 that is conveyed by means of a conveyor 2, and' information such as the identification number, product shipment destination, and product name recorded on the IC card 1 are read as a response.

In the conventional example, three reader/writers, 4A, 4B, and 4C, are provided, and these reader/writers 4A through 4C are integrally controlled by means of a control terminal 5. The reader/writer 4A has two antennas 6A, which are placed respectively above and below the conveyor 2, and these antennas 6A are connected to the reader/writer 4A via divider/synthesizers 7A. The reader/writer 4B has two antennas 6B, which are placed respectively on the left and right sides of the conveyor 2, and these antennas 6B are connected to the reader/writer 4B via divider/synthesizers 7B. The reader/writer 4C has an annular antenna 6C, and the conveyor 2 passes to the center of this antenna 6C.

Specifically, the orientation can be changed so that the antenna 6C is omnidirectional and transmits interrogation signals from all directions to the IC card 1 on the conveyor 2, the antenna 6A transmits interrogation information from the up and down directions to the IC card 1 on the conveyor 2, and the antenna 6B transmits interrogation information from the left and right directions to the IC card 1 on the conveyor 2.

In addition, as shown in Figure 2, the antennas are arranged so that the possible areas of communication by the antenna 6A and antenna 6B overlap, the possible areas of communication by the antenna 6B and antenna 6C partially overlap, and a possible communication area expanding in the lengthwise direction along the conveyor 2 by these antennas 6A through 6C is formed. The reader/writers 4A through 4C, as shown in Figure 3, are each equipped with a synchronization circuit 8, and all of the reader/writers 4A through 4C perform communication processing in synchronicity as shown in Figure 4 in response to a synchronizing signal t input from a control terminal 5.

This synchronization circuit 8, in response to the synchronization signal t, converts all of the parallel transmission data input from the control terminal 5 into serial data and transmits this data from the antenna as modulated signal output, and the transmission timing from the antenna is regulated by means of the synchronization signal t.

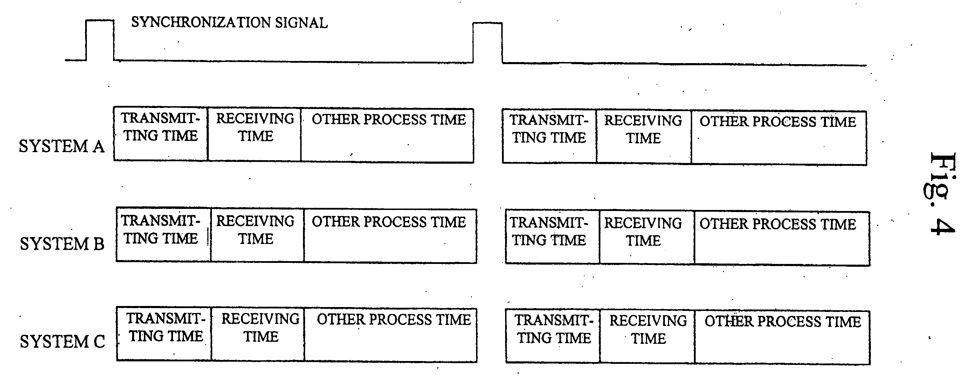

As shown in Figure 4, in this example, since the receiving process and other processes are set so as to be performed immediately following the transmission process, the receiving timing is also synchronized due to the fact that transmission timing is synchronized.

The timing of transmission and receiving are explained in detail, with reference to Figure 4.

The transmission and receiving process timing in the reader/writer 4A is represented as system A, the transmission and receiving process timing in the reader/writer 4B as system B, and the transmission and receiving process timing in the reader/writer 4C as system C. The reader/writers 4A through 4C perform wireless transmission (transmission time) of the same interrogation information from their antennas in response to the synchronization signal t, and then perform receiving processing on the response signal from the IC card 1 (receiving time) in timing of the same position and perform other processing (other processing time).

More specifically, all of the reader/writers 4A through 4C transmit an interrogation signal simultaneously and receive a response signal from the IC card 1 simultaneously.

Accordingly, by means of the reader/writer system described above, interrogation signals are transmitted simultaneously from all of the antennas 6A through 6C to the product 3 (IC card 1) conveyed by the conveyor 2 and passing through the communication area formed by the antennas 6A through 6C, and in response, the response signal transmitted from the IC card 1 is received by an antenna that is in a position where communication is possible at that time, and is processed by the reader/writer connected to that antenna.

Features relating to the aforesaid reader/writer system are disclosed, for example, in Japanese Unexamined Patent Application Publication 2003-283367 and in Japanese Unexamined Patent Application Publication 2000-242742.

As explained above, in the conventional example, in order to synchronize the transmission and receiving timing among the reader/writers, a control terminal is provided. This control terminal is connected to each reader/writer and controls each reader/writer, and communication setting between each reader/writer and the control terminal becomes necessary. For this reason, in the conventional example, in order to increase the number of reader/writers accommodated by the control terminal, there is the problem that major setting operations are required between each reader/writer and a control terminal. Moreover, in the conventional example, in order to allow synchronization signals from the control terminal to be received without fail by the reader/writers, it becomes necessary to provide a connection by wire such as an IP net or control line, restricting the system structure, e.g., the arrangement of the control terminal and reader/writers in the reader/writer system.

In the future, a system which can establish synchronicity of transmission and receiving of each reader/writer independently without obtaining synchronization of the reader/writers by means of an unspecified number of control terminals is desired as a reader/writer system.

It is desirable to obtain synchronization among reader/writers in a reader/writer system without providing a control terminal.
(1) A first aspect of the present invention can provide a reader/writer having a transmission means that transmits an interrogation signal to an FR tag and a receiving means that receives a response signal from an RF tag. In this aspect, an interrogation signal is transmitted based on a synchronization signal received from another reader/writer.
(2) A second aspect of the present invention can provide a reader/writer which performs wireless communication with an RF tag and which comprises a receiving means which receives wireless signals, a means for halting the transmission of wireless signals and confirming whether there is a synchronization signal from another reader/writer, and a transmitting means that transmits a wireless signal synchronized to the timing of another reader/writer obtained based on said synchronization signal when the transmission of said synchronization signal is confirmed, and transmits a wireless signal by its own timing when it is confirmed that said synchronization signal has not been transmitted.
(3) A third aspect of the present invention can provide an RFID system having a plurality of reader/writers including a first reader/writer which broadcasts a synchronization signal in a frequency other than the frequency for transmitting and receiving wireless signals, and a second reader/writer, which receives said synchronization signal and transmits wireless signals in a transmission timing based on said synchronization signal.

By means of the reader/writer, RF tag and RFID systems embodying the present invention, it is possible to establish synchronization of transmitting and receiving independently between reader/writers without obtaining synchronization by means of a control terminal. Additionally, in an embodiment of the present invention, it is possible to establish synchronization between reader/writers without interfering with the system operation, since synchronization between reader/writers can be obtained without halting the supply of power to RF tags in the system.

In one embodiment of the present invention, a reader/writer comprises a transmitter operable to transmit an interrogation signal to an RF tag, and a receiver operable to receive a response signal from an RF tag, wherein the transmitter is operable to transmit an interrogation signal based on a synchronization signal received from another reader/writer. Preferably, the transmitter is further operable to open an interval to allow transmission of the synchronization signal. The synchronization signal is preferably divided into a plurality of transmissions and receptions. The receiver is preferably further operable to perform synchronization based on a global synchronization signal or standard signal from a GPS, if the global synchronization signal or the standard signal from a GPS is received outside of the interval during which the synchronization signal can be transmitted. The transmitter is preferably further operable to issue a synchronization signal in a timing delayed from the timing of the synchronization signal issued by another reader/writer during the interval in which a synchronization signal can be transmitted. The synchronization signal is preferably synchronized based on a global synchronization signal or a standard signal from a GPS. In one embodiment, a maximum number of synchronization signals that can be transmitted during the interval in which the synchronization signal can be transmitted is indicated in the synchronization signal. The synchronization signal preferably includes a region which indicates a priority sequence. A timing of transmission is preferably synchronized based on a timing of a synchronization signal having a higher priority level among the synchronization signals.

In one embodiment of the present invention, a reader/writer for performing wireless communication with an RF tag, comprises a receiver operable to receive wireless signals, a device operable to halt transmission of wireless signals and to confirm whether there is a synchronization signal from an other reader/writer, and a transmitter operable to transmit a wireless signal synchronized to timing of the other reader/writer obtained based on the synchronization signal when the transmission of the synchronization signal is confirmed, and to transmit a wireless signal by its own timing when it is confirmed that the synchronization signal has not been transmitted. The synchronization signal is preferably made a same signal intensity as the synchronization signal having the weakest signal intensity. A new synchronization signal is preferably transmitted in the timing interval of the synchronization signal where the signal intensity is at or below a threshold value. In one embodiment a region is provided wherein a flag is set up indicating continuous data in a transmission data of the wireless signal. Completion of continuous data is preferably detected by receiving no signal. The synchronization signal is preferably provided with a permissible amplitude level in the system in the received of signals below that amplitude level is restricted. In one embodiment, transmission of the synchronization signal is temporarily halted, and the synchronization signal is transmitted after confirming that a synchronization signal from another reader/writer in the timing interval of the synchronization signal exists, and the signal intensity of that synchronization signal is smaller than a threshold value.

In one embodiment of the present invention, an RFID system having a plurality of reader/writers comprises a first reader/writer operable to broadcast a synchronization signal on a frequency other than a frequency for transmitting and receiving wireless signals, and a second reader/writer operable to receive the synchronization signal and to transmit wireless signals in a transmission timing based on the synchronization signal.

In one embodiment of the present invention, a reader/writer for exchanging wireless signals with an RF tag comprises a device operable to perform receiving and transmission of wireless signals by opening an interval in which a synchronization signal can be transmitted, and a measuring device operable to measure signal intensity of the synchronization signals received by the device, and, if the synchronization signals that can be transmitted during the interval are full, to transmit synchronization signals in timing of a synchronization signal having a weakest signal intensity among those measured by the measuring device. The synchronization signal is preferably made a same signal intensity as the synchronization signal having the weakest signal intensity. A new synchronization signal is preferably transmitted in the timing interval of the synchronization signal where the signal intensity is at or below a threshold value. In one embodiment, a region is provided wherein a flag is set up indicating continuous data in a transmission date of the wireless signal. Completion of continuous data is preferably detected by receiving no signal. The synchronization signal is preferably provided with a permissible amplitude level in the system in the received of signals below that amplitude level is restricted. In one embodiment, transmission of the synchronization signal is temporarily halted, and the synchronization signal is transmitted after confirming that a synchronization signal from another reader/writer in the timing interval of the synchronization signal exists, and the signal intensity of that synchronization signal is smaller than a threshold value.

In one embodiment of the present invention, a reader/writer for performing wireless communication with an RF tag comprises a receiver operable to receive wireless signals, a device operable to confirm whether a synchronization signal from another reader/writer exists while transmitting an unmodulated wave, and a transmitter operable to transmits a wireless signal synchronized with transmission timing of another reader/writer obtained based on the synchronization signal when the synchronization signal is confirmed, and to transmit a wireless signal in its own transmission timing when absence of such synchronization signal is confirmed.

In one embodiment of the present invention, a reader/writer for performing wireless communication with an RF tag comprises a measuring device operable to measure a reception level of synchronization signals received, and a detecting device operable to detects synchronization signals in which the measured reception level is at or above a threshold value, to calculate an average transmission timing of that synchronization signal, and to correct the transmission timing of synchronization signals based on the average of the transmission timings obtained by the calculation.

Reference will now be made, by way of example, to the accompanying drawings, in which:
Fig. 1 is a diagram showing the constitution of a conventional reader/writer system.

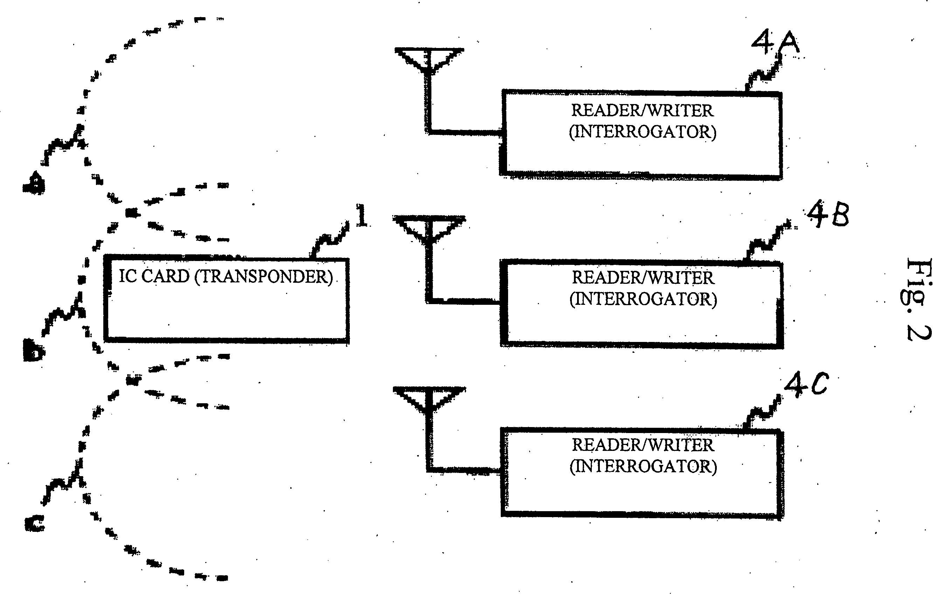

Fig. 2 is a diagram explaining the enlargement of the communication region by means of a plurality of reader/writers.

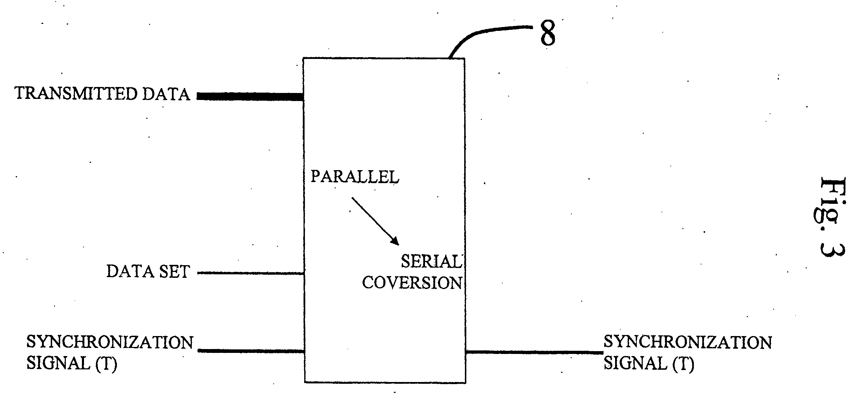

Fig. 3 is a diagram explaining one example of a conventional synchronization circuit.
Fig. 4 is a diagram explaining one example' of conventional synchronization timing.

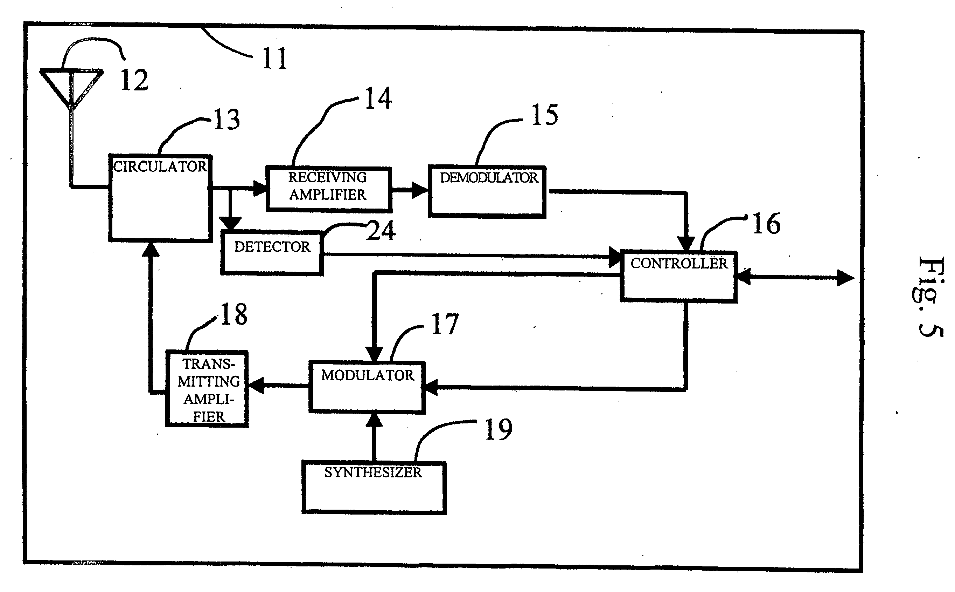

Fig. 5 is a diagram showing the constitution of a reader/writer according to an embodiment of the present invention.

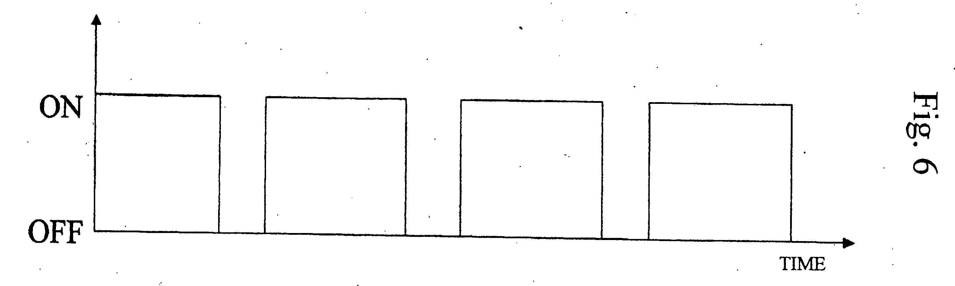

Fig. 6 is a diagram showing the timing pattern in which modulation is switched ON/OFF.

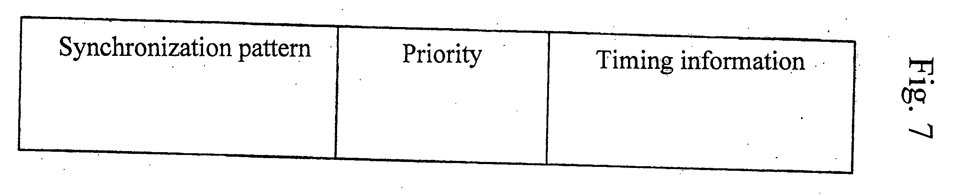

Fig. 7 is a diagram showing a synchronization signal format.

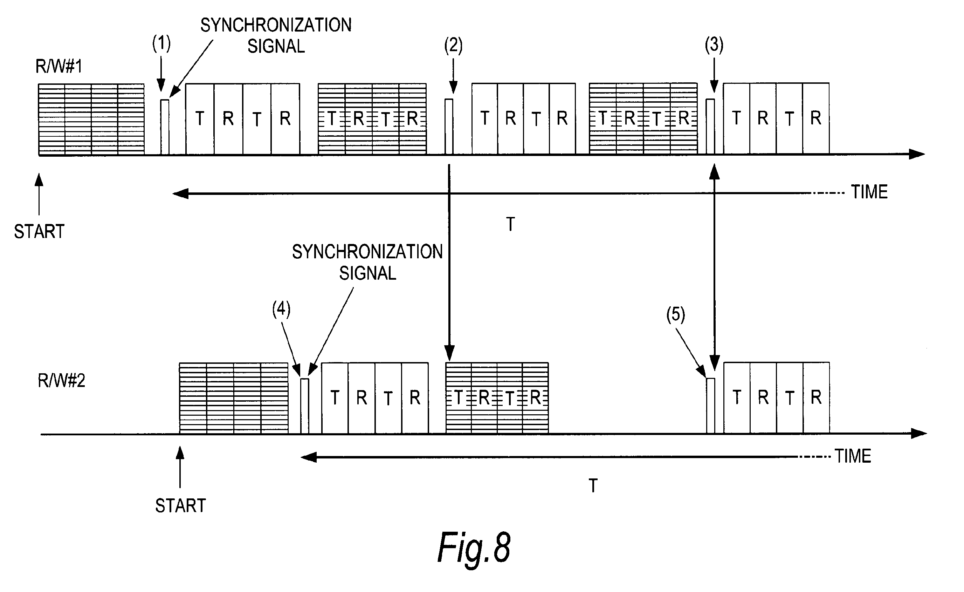

Fig. 8 is a diagram showing an example of the method of obtaining synchronization using two R/W's.

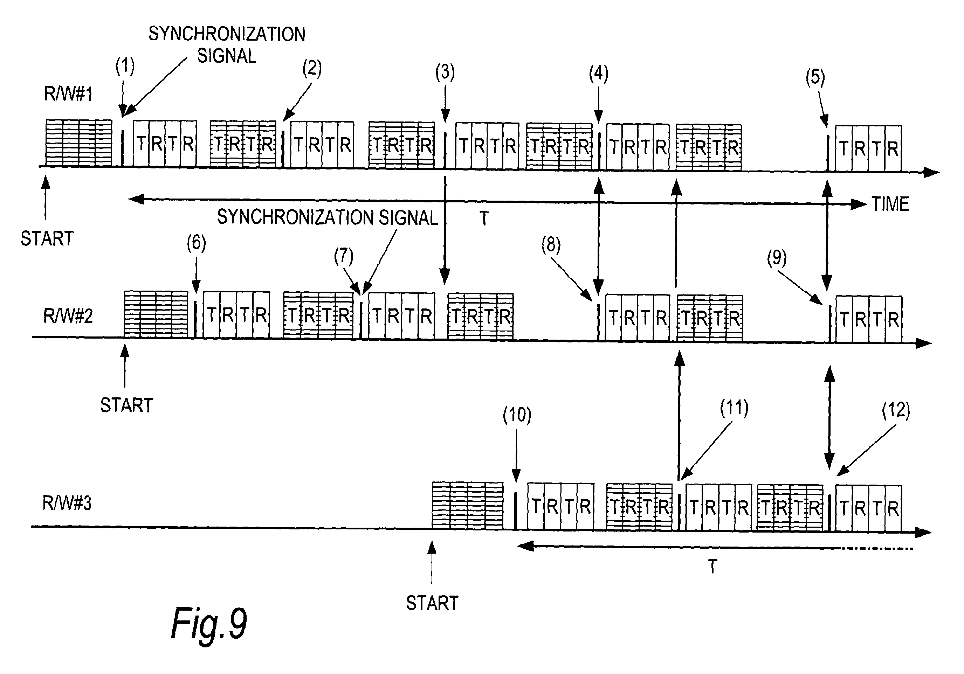

Fig. 9 is a diagram showing an example of the method of obtaining synchronization using three R/W's.

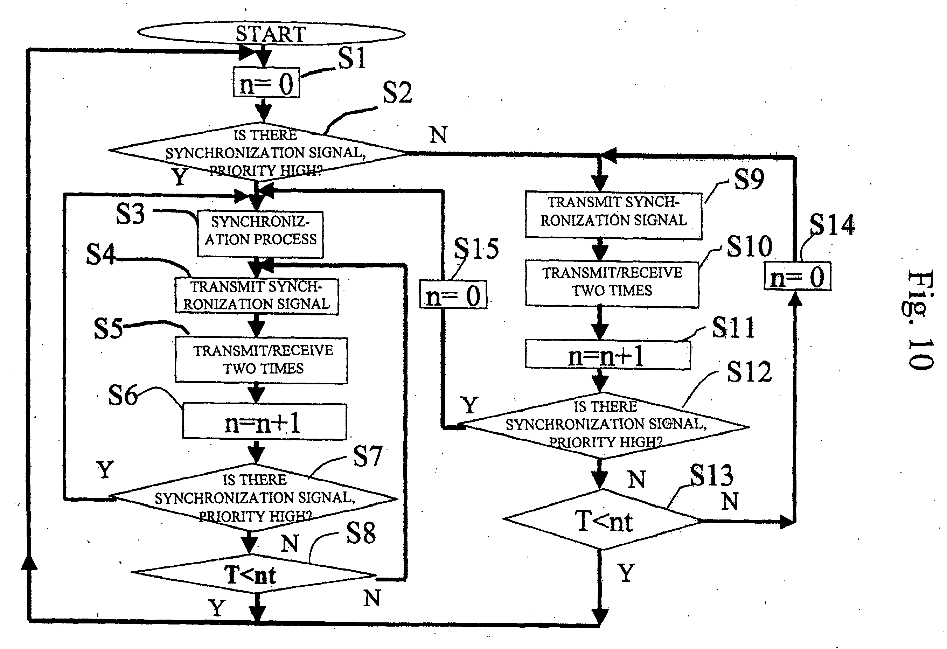

Fig. 10 is a diagram showing a process flow in an embodiment of the present invention.

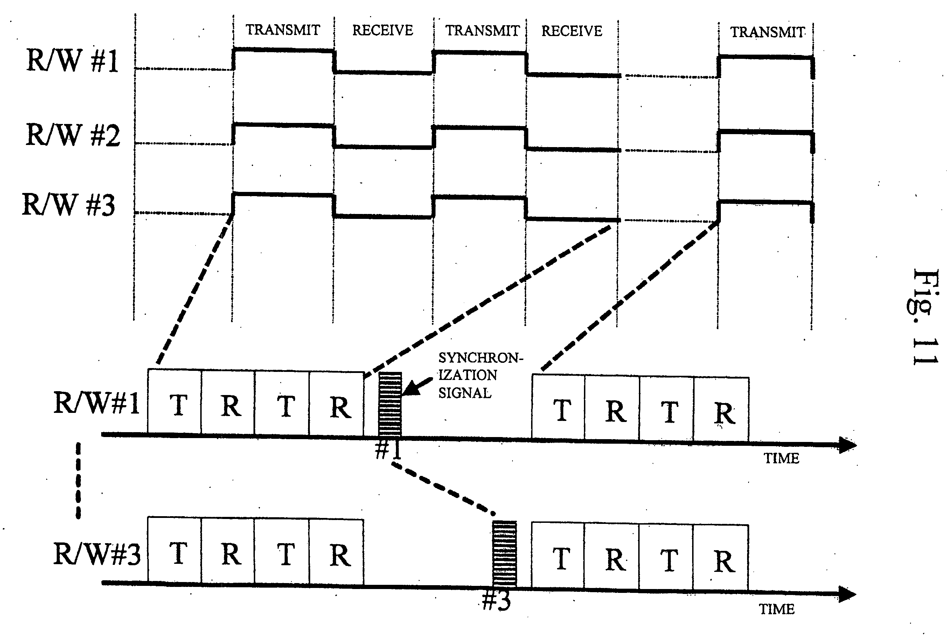

Fig. 11 is a diagram showing the transmission and receiving timing patterns of three R/W's.

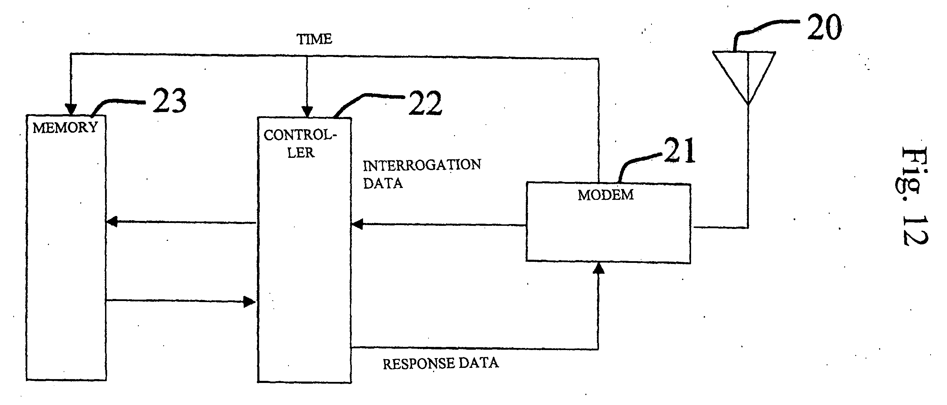

Fig. 12 is a diagram showing the constitution of an RF tag.

Next, embodiments of the invention are explained, with reference to the figures.

### (a) Explanation of Embodiments of the Present Invention

Figure 5 is a figure showing the configuration of a reader/writer according to an embodiment of the present invention. Figure 6 shows a modulation ON/OFF timing pattern.

In Figure 5, first, the transmission operation of the reader/writer is explained. A controller 16 transmits and receives data to and from a control terminal or personal computer connected by a means such as a LAN. A modulator 17 switches modulation ON/OFF on the carrier wave from a synthesizer 19 in accordance with data from a control line 16 and timing from the controller 16 (see Figure 6). A transmission amplifier 18 amplifies the modulated signal or unmodulated wave from the modulator 17. The amplified modulated signal or unmodulated wave is transmitted from the antenna 12 via a circulator 13. The reader/writer is able to receive the signal from another reader/writer or RF tag via the antenna 12 and circulator 13 while the unmodulated wave is sent from the antenna. The reader/writer amplifies the signal received from the other reader/writer or RF tag with a receiving amplifier 14, demodulates the signal a demodulator 15, processes it with a controller 16, and forwards it to the control terminal or personal computer connected by LAN or the like. A detector 24 detects the signal strength or level of the received signal from the circulator 13, which it outputs to the controller 16. Based on the signal strength or level of the signal that is the detection result of the detector 24 and the results of identification of the R/W from the priority level of the demodulated synchronization signal from the demodulator 25, the controller 16 is able to distinguish the priority level of an R/W that has transmitted a signal having a stronger or weaker signal strength or level. A constitution may be added whereby a receiving amplifier 14 limits the receiving of received signals that are below the permissible amplitude.

Figure 7 shows the signal synchronization format necessary to obtain synchronization with multiple R/W's.

A synchronization pattern that is formed in a fixed pattern indicating a synchronization signal, a region stating the priority level, timing information indicating the interval from the time of the synchronization signal to the time of data transmission and similar information are written into this synchronization signal in that sequence from the head of the signal.

Figure 8 shows an example where synchronization of two R/W's is obtained. Figure 10 shows the process flow of an embodiment of the invention. The operation of obtaining synchronization shown in Figure 8 is explained below referring to the flow shown in Figure 10.

In this figure, R/W#1 is activated first, and then R/W#2 is activated. R/W#1 thus has the highest priority and R/W#2 the second-highest priority. The sequence where by R/W#2 is synchronized with the higher-priority R/W#1 is explained below.

First, R/W#1 is activated initially, and the count value of a counter not shown in the figure is set at 0 (step S1 in Figure 10). R/W#1 monitors whether a synchronization signal having a high priority level is issued by another R/W during an interval of 4 slots (step S2 in Figure 10). Since no high-priority synchronization signal has been issued by another R/W according to the results of this monitoring, R/W#1 issues a synchronization signal (1) having its own priority level written in (step S9 in Figure 10). R/W#1 transmits and receives data two times (step S10 in Figure 10). R/W#1 adds 1 to the counter value of its counter (step S11 in Figure 10) and monitors whether a synchronization signal having a high level of priority has been transmitted from another R/W by twice repeating a transmission interval (time slot T) and receiving interval (time slot R) in which there is no modulation or the signal is stopped (step S12 in Figure 10). Since, as a result of this monitoring, no other R/W has been found to have issued a synchronization signal having a high priority level, and the timer interval is shorter than the time T (step S13 in Figure 10), R/W#1 changes the count value to 0 (step S14 in Figure 10) and sends out a synchronization signal (2) (step S9 in Figure 10). R/W#1 performs data transmission and receiving two times (step S10 in Figure 10), adds 1 to the counter value in its counter (step S11 in Figure 10), and monitors whether a synchronization signal having a high level of priority has been transmitted from another R/W by twice repeating a transmission interval (time slot T) and receiving interval (time slot R) in which there is no modulation or the signal is stopped (step S 12 in Figure 10). Since, as a result of this monitoring, no other R/W has been found to have issued a synchronization signal having a high priority level, and the timer interval is shorter than the time T (step S13 in Figure 10), R/W#1 changes the count value to 0 (step S 14 in Figure 10) and sends out a synchronization signal (3) (step S9 in Figure 10). R/W#1 performs data transmission and receiving two times (step S 10 in Figure 10).

Next, R/W#2 is activated after R/W#1 and sets the counter value of its internal counter, not shown in the figure, to 0 (step S1 in Figure 10). R/W# [sic] monitors whether a synchronization signal having a high priority level is issued by another R/W during an interval of 4 slots (step S2 in Figure 10). Since no high-priority synchronization signal has been issued by another R/W according to the results of this monitoring, R/W#2 issues a synchronization signal (4) into which its own priority level is written (step S9 in Figure 10). R/W#1 [sic] transmits and receives data two times (step S10 in Figure 10), adds 1 to the counter value of its counter (step S11 in Figure 10) and monitors whether a synchronization signal having a high level of priority has been transmitted from another R/W by twice repeating a transmission interval (time slot T) and receiving interval (time slot R) in which there is no modulation or the signal is stopped (step S12 in Figure 10). As a result of this monitoring, R/W#2 detects a synchronization signal (2) having a high priority level from another R/W (here, R/W#1). R/W#2 resets the count value of its counter to 0 (step S15 in Figure 10), and shifts to synchronous processing mode (step S3 in Figure 10). Based on the timing information of the synchronization signal (2) from R/W#1, R/W#2 issues its own synchronization signal (5) delayed so as not to overlap with the synchronization signal issuance timing of R/W#1 (step S4 in Figure 10). R/W#2 next performs data transmission and receiving two times synchronously with R/W#1 (step S5 in Figure 10).

Figure 9 shows an example wherein three R/W's are synchronized. The synchronizing operation in Figure 9, like that in Figure 8, is explained referring to the flow in Figure 10.

In this figure, R/W#1 is activated first, followed by R/W#2, and then R/W#3 is activated. R/W#3 has the highest priority level, R/W#1 the second-highest, and R/W#2 the third-highest. R/W#2 is synchronized with R/W#1, which has the higher priority, and then R/W#1 and 2 are synchronized with R/W#3, which has the highest priority.

R/W#1 is activated first, and sets the count value of its internal counter (not shown) to 0 (step S1 in Figure 10). R/W#1 monitors whether a synchronization signal having a high priority level is issued by another R/W during an interval of 4 slots (step S2 in Figure 10). Since no high-priority synchronization signal has been issued by another R/W according to the results of this monitoring, R/W#1 issues a synchronization signal (1) having its own priority level written in (step S9 in Figure 10). R/W#1 transmits and receives data two times (step S10 in Figure 10), adds 1 to the counter value of its counter (step S11 in Figure 10), and monitors whether a synchronization signal having a high level of priority has been transmitted from another R/W by twice repeating a transmission interval (time slot T) and receiving interval (time slot R) in which there is no modulation or the signal is stopped (step S12 in Figure 10). Since, as a result of this monitoring, no other R/W has been found to have issued a synchronization signal having a high priority level, and the timer interval is shorter than the time T (step S13 in Figure 10), R/W#1 changes the count value to 0 (step S14 in Figure 10) and sends out a synchronization signal (2) (step S9 in Figure 10). R/W#1 performs transmission and receiving of data twice (step 10 in Figure 10), adds 1 to the counter value in its counter (step S11 in Figure 10), and monitors whether a synchronization signal having a high level of priority has been transmitted from another R/W by twice repeating a transmission interval (time slot T) and receiving interval (time slot R) in which there is no modulation or the signal is stopped (step S12 in Figure 10). Since, as a result of this monitoring, no other R/W has been found to have issued a synchronization signal having a high priority level, and the timer interval is shorter than the time T (step S13 in Figure 10), R/W#1 changes the count value to 0 (step S14 in Figure 10) and sends out a synchronization signal (3) (step S9 in Figure 10).

R/W#1 performs data transmission and receiving two times (step S10 in Figure 10), adds 1 to the count of its internal counter (step S11 in Figure 10), and monitors whether a synchronization signal having a high level of priority has been transmitted from another R/W by twice repeating a transmission interval (time slot T) and receiving interval (time slot R) in which there is no modulation or the signal is stopped (step S12 in Figure 10). Since, as a result of this monitoring, no other R/W has been found to have issued a synchronization signal having a high priority level, and the timer interval is shorter than the time T (step S13 in Figure 10), R/W#1 changes the count value to 0 (step S14 in Figure 10) and sends out a synchronization signal (4) (step S9 in Figure 10).

R/W#1 performs data transmission and receiving two times (step S10 in Figure 10), adds 1 to the count of its internal counter (step S11 in Figure 10), and monitors whether a synchronization signal having a high level of priority has been transmitted from another R/W by twice repeating a transmission interval (time_slot T) and receiving interval (time slot R) in which there is no modulation or the signal is stopped (step S12 in Figure 10).

As a result of this monitoring, R/W#1 detects a synchronization signal (11) having a high priority level from another R/W (here, R/W#3), so it resets the count value of its counter to 0 (step S15 in Figure 10), and shifts to synchronous processing mode (step S3 in Figure 10). Based on the timing information of the synchronization signal from R/W#3, R/W#1 issues its own synchronization signal (5) (step S4 in Figure 10). R/W#1 performs data transmission and receiving two times (step S10 in Figure 10).

Next, R/W#2 is activated and sets the counter value of its internal counter, not shown in the figure, to 0 (step S1 in Figure 10). R/W#2 monitors whether a synchronization signal having a high priority level is issued by another R/W during an interval of 4 slots (step S2 in Figure 10). Since the issuance of a high-priority synchronization signal by another R/W is not detected according to the results of this monitoring, R/W#2 issues a synchronization signal (6) into which its own priority level is written (step S9 in Figure 10). R/W#2 transmits and receives data two times (step S10 in Figure 10), adds 1 to the counter value of its counter (step S11 in Figure 10) and monitors whether a synchronization signal having a high level of priority has been transmitted from another R/W by twice repeating a transmission interval (time slot T) and receiving interval (time slot R) in which there is no modulation or the signal is stopped (step S12 in Figure 10). Since no high-priority synchronization signal has been issued by another R/W according to the results of this monitoring and the timer interval is smaller than the time T (step S 13 in Figure 10), R/W#2 resets its count value to 0 (step S 14 in Figure 10), and issues a synchronization signal (7) (step S9 in Figure 10). R/W#2 transmits and receives data two times (step S10 in Figure 10), adds 1 to the counter value of its counter (step S11 in Figure 10) and monitors whether a synchronization signal having a high level of priority has been transmitted from another R/W by twice repeating a transmission interval (time slot T) and receiving interval (time slot R) in which there is no modulation or the signal is stopped (step S12 in Figure 10). As a result of this monitoring, R/W#2 detects a synchronization signal (3) having a high priority level from another R/W (here, R/W#1), so it resets the count value of its counter to 0 (step S15 in Figure 10), and shifts to synchronous processing mode (step S3 in Figure 10). Based on the timing information of the synchronization signal (3) from R/W#1, R/W#2 in synchronous processing mode issues its own synchronization signal (8) (step S4 in Figure 10). R/W#2 performs data transmission and receiving two times (step S10 in Figure 10), adds 1 to the counter value of its counter (step S11 in Figure 10) and monitors whether a synchronization signal having a high level of priority has been transmitted from another R/W by twice repeating a transmission interval (time slot T) and receiving interval (time slot R) in which there is no modulation or the signal is stopped (step S12 in Figure 10). As a result of this monitoring, R/W#2 detects a synchronization signal (11) having a high priority level from another R/W (here, R/W#3), so it resets the count value of its counter to 0 (step S15 in Figure 10), and shifts to synchronous processing mode (step S3 in Figure 10). Based on the timing information of the synchronization signal from R/W#3, R/W#2 in synchronous processing mode issues its own synchronization signal (9) (step S4 in Figure 10). R/W#2 performs data transmission and receiving two times (step S5 in Figure 10).

Next, R/W#3 is activated and sets the counter value of its internal counter, not shown in the figure, to 0 (step S1 in Figure 10). R/W#3 monitors whether a synchronization signal having a high priority level is issued by another R/W during an interval of 4 slots (step S2 in Figure 10). Since the issuance of a high-priority synchronization signal by another R/W is not detected according to the results of this monitoring, R/W#3 issues a synchronization signal (10) into which its own priority level is written (step S9 in Figure 10). R/W#3 transmits and receives data two times (step S10 in Figure 10), adds 1, to the counter value of its counter (step S11 in Figure 10) and monitors whether a synchronization signal having a high level of priority has been transmitted from another R/W by twice repeating a transmission interval (time slot T) and receiving interval (time slot R) in which there is no modulation or the signal is stopped (step S12 in Figure 10). Since no high-priority synchronization signal has been issued by another R/W according to the results of this monitoring and the timer interval is smaller than the time T (step S13 in Figure 10), R/W#3 resets its count value to 0 (step S14 in Figure 10) and issues a synchronization signal (11) (step S9 in Figure 10).

R/W#3 transmits and receives data two times (step S10 in Figure 10), adds 1 to the counter value of its counter (step S11 in Figure 10) and monitors whether a synchronization signal having a high level of priority has been transmitted from another R/W by twice repeating a transmission interval (time slot T) and receiving interval (time slot R) in which there is no modulation or the signal is stopped (step S12 in Figure 10). Since no high-priority synchronization signal has been issued by another R/W according to the results of this monitoring and the timer interval is smaller than the time T (step S13 in Figure 10), R/W#3 resets its count value to 0 (step S14 in Figure 10) and issues a synchronization signal (12) (step S9 in Figure 10). R/W#3 transmits and receives data two times (step S10 in Figure 10).

Figure 11 shows a transmission and receiving timing pattern for multiple R/W's.

The figure shows the timing pattern whereby synchronization is obtained for all three R/W's through the synchronization processing according to the explanation in Figure 9.

In Figure 11, the timing for the following transmission and receiving is explained for the case where an unspecified number of neighboring R/W's exist, in this case where three R/W's exist.

Transmission and receiving are mutually synchronized for each of R/W#1 through R/W#3. After R/W#1 has repeated transmission (the T time slot) and receiving (the R time slot) two times, it issues synchronization signal #1. After R/W#2 has repeated transmission (the T time slot) and receiving (the R time slot) two times, it issues synchronization signal #2 in different timing from the timing of issuance of synchronization signal #1. After R/W#3 has repeated transmission (the T time slot) and receiving (the R time slot) two times, it issues synchronization signal #3 in different timing from the timing of issuance of synchronization signal #1 and #2. The letter T in Figure 11 indicates one cycle, and indicates the interval in which transmission (the T time slot) and receiving (the R time slot) are repeated twice and a synchronization signal is issued.

Figure 12 shows the constitution of the RF tag.

In Figure 12, an antenna 20 receives a modulated signal or unmodulated wave from a reader/writer, which it outputs to the modem 21. The modem 21 rectifies the modulated signal or unmodulated wave received into a direct current, supplies the direct current as a power source to the controller 22 in memory 23, and demodulates the modulated signal received, which it outputs to the controller 22 as interrogation data. The controller 22 confirms whether the content of the interrogation data is a data writing instruction or data reading instruction, and if it concerns writing, writes the data of the interrogation data to be written into the memory 23. If the interrogation data from the reader/writer is a reading instruction, then the RF tag reads data from the memory 23 in accordance with the address designated in the interrogation data and outputs it to the controller 22. The controller 22 then modulates the data (response data) that has been read from the memory 23 using a modulator 21 and transmits it from the antenna 20.

In addition, as a separate example of application, if continuous data is transmitted, then lack of a signal may be used to indicate the completion of the data.

As another application, when interference between reader/writers in a system is considered, a permissible amplitude level may be provided by the system in the synchronization signal and the receipt of signals under this amplitude level restricted.

As another application, a global synchronization signal or a standard signal from a GPS may be used as a synchronization signal.

As yet another example of application, if synchronization signals are received simultaneously from two reader/writers belonging to different systems, the system may be constituted so that a random number generated by each reader is attached to the synchronization signal and an interrogation signal is issued based on the synchronization signal having the larger, or smaller, random number value.

Although specific embodiments of the present invention have been described, it will be understood by those of skill in the art that there are other embodiments that are equivalent to the described embodiments. Accordingly, it is to be understood that the invention is not to be limited by the specific illustrated embodiments, but only by the scope of the appended claims.

This application is related to and claims priority to Japanese Application No. 2004-237437 filed August 17, 2004 in the Japanese Patent Office, the contents of which are incorporated by reference herein.

## Claims

1. A reader/writer comprising:
a transmitter operable to transmit an interrogation signal to an RF tag; and
a receiver operable to receive a response signal from an RF tag;
wherein the transmitter is operable to transmit an interrogation signal based on a synchronization signal received from another reader/writer.

2. The reader/writer according to Claim 1, wherein the transmitter is further operable to open an interval to allow transmission of the synchronization signal.

3. The reader/writer according to Claim 1 or 2, wherein the synchronization signal is divided into a plurality of transmissions and receptions.

4. The reader/writer according to Claim 2, wherein the receiver is further operable to perform synchronization based on a global synchronization signal or standard signal from a GPS, if the global synchronization signal or the standard signal from a GPS is received outside of the interval during which the synchronization signal can be transmitted.

5. The reader/writer according to any preceding Claim, wherein the transmitter is further operable to issue a synchronization signal in a timing delayed from the timing of the synchronization signal issued by another reader/writer during the interval in which a synchronization signal can be transmitted.

6. The reader/writer according to any preceding Claim, wherein the synchronization signal is synchronized based on a global synchronization signal or a standard signal from a GPS.

7. The reader/writer according to Claim 2, wherein a maximum number of synchronization signals that can be transmitted during the interval in which the synchronization signal can be transmitted is indicated in the synchronization signal.

8. The reader/writer according to any preceding Claim, wherein the synchronization signal includes a region which indicates a priority sequence.

9. The reader/writer according to Claim 8, wherein a timing of transmission is synchronized based on a timing of a synchronization signal having a higher priority level among the synchronization signals.

10. A reader/writer for performing wireless communication with an RF tag, comprising:
a receiver operable to receive wireless signals;
a device operable to halt transmission of wireless signals and to confirm whether there is a synchronization signal from an other reader/writer; and
a transmitter operable to transmit a wireless signal synchronized to timing of the other reader/writer obtained based on the synchronization signal when the transmission of the synchronization signal is confirmed, and to transmit a wireless signal by its own timing when it is confirmed that the synchronization signal has not been transmitted.

11. The reader/writer of Claim 10, wherein the synchronization signal is made a same signal intensity as the synchronization signal having the weakest signal intensity.

12. The reader/writer of Claim 10, wherein a new synchronization signal is transmitted in the timing interval of the synchronization signal where the signal intensity is at or below a threshold value.

13. The reader/writer of Claim 10, wherein a region is provided wherein a flag is set up indicating continuous data in a transmission data of the wireless signal.

14. The reader/writer of Claim 13, wherein completion of continuous data is detected by receiving no signal.

15. The reader/writer of Claim 10, wherein the synchronization signal is provided with a permissible amplitude level in the system in the received of signals below that amplitude level is restricted.

16. The reader/writer of Claim 10, wherein transmission of the synchronization signal is temporarily halted, and the synchronization signal is transmitted after confirming that a synchronization signal from another reader/writer in the timing interval of the synchronization signal exists, and the signal intensity of that synchronization signal is smaller than a threshold value.

17. An RFID system having a plurality of reader/writers; the RFID system comprising:
a first reader/writer operable to broadcast a synchronization signal on a frequency other than a frequency for transmitting and receiving wireless signals; and
a second reader/writer operable to receive the synchronization signal and to transmit wireless signals in a transmission timing based on the synchronization signal.

18. A reader/writer for exchanging wireless signals with an RF tag, the reader/writer comprising:
a device operable to perform receiving and transmission of wireless signals by opening an interval in which a synchronization signal can be transmitted; and
a measuring device operable to measure signal intensity of the synchronization signals received by the device, and, if the synchronization signals that can be transmitted during the interval are full, to transmit synchronization signals in timing of a synchronization signal having a weakest signal intensity among those measured by the measuring device.

19. The reader/writer of Claim 18, wherein the synchronization signal is made a same signal intensity as the synchronization signal having the weakest signal intensity.

20. The reader/writer of Claim 18, wherein a new synchronization signal is transmitted in the timing interval of the synchronization signal where the signal intensity is at or below a threshold value.

21. The reader/writer of Claim 18, wherein a region is provided wherein a flag is set up indicating continuous data in a transmission data of the wireless signal.

22. The reader/writer of Claim 21, wherein completion of continuous data is detected by receiving no signal.

23. The reader/writer of Claim 18, wherein the synchronization signal is provided with a permissible amplitude level in the system in the received of signals below that amplitude level is restricted.

24. The reader/writer of Claim 18, wherein transmission of the synchronization signal is temporarily halted, and the synchronization signal is transmitted after confirming that a synchronization signal from another reader/writer in the timing interval of the synchronization signal exists, and the signal intensity of that synchronization signal is smaller than a threshold value.

25. A reader/writer for performing wireless communication with an RF tag, the reader/writer comprising:
a receiver operable to receive wireless signals;
a device operable to confirm whether a synchronization signal from another reader/writer exists while transmitting an unmodulated wave; and
a transmitter operable to transmit a wireless signal synchronized with transmission timing of another reader/writer obtained based on the synchronization signal when the synchronization signal is confirmed, and to transmit a wireless signal in its own transmission timing when absence of such synchronization signal is confirmed.

26. A reader/writer for performing wireless communication with an RF tag, the reader/writer comprising:
a measuring device operable to measure a reception level of synchronization signals received; and
a detecting device operable to detects synchronization signals in which the measured reception level is at or above a threshold value, to calculate an average transmission timing of that synchronization signal, and to correct the transmission timing of synchronization signals based on the average of the transmission timings obtained by the calculation.
